# EUROPEAN PATENT SPECIFICATION

(11) **EP 1 398 359 B1**
(45) Date of publication and mention of the grant of the patent: **17.09.2008**
(21) Application number: 02722740.4
(22) Date of filing: 24.04.2002
(51) Int. Cl.: C09D 183/16, C09D 5/16, C08L 83/16

(54) **ANTI-STAINING COATING SOLUTION COMPRISING INORGANIC POLYSILAZANE**
ANTI-SCHMUTZ BESCHICHTUNGSLÖSUNG MIT ANORGANISCHEM POLYSILAZAN
SOLUTION D'ENDUCTION ANTI-SALISSURES CONTENANT DU POLYSILAZANE ANORGANIQUE

(30) Priority: 27.04.2001 JP 2001131491
(43) Date of publication of application: 17.03.2004
(73) Proprietor: Clariant Finance (BVI) Limited, Road Town, Tortola (VG)
(72) Inventor: SUZUKI, Tadashi, Clariant KK, Bunkyo Green Court, Bunkyo-ku, Tokyo 113-8662 (JP)
(74) Representative: Hütter, Klaus
(86) International application number: PCT/JP2002/004069
(87) International publication number: WO 2002/088269

(56) References cited:
- JP-A- 11 116 815
- JP-A- 11 254 599
- US-A- 4 933 160
- US-A- 6 140 451
- PATENT ABSTRACTS OF JAPAN vol. 1999, no. 09, 30 July 1999 (1999-07-30) & JP 11 116815 A (TONEN CORP), 27 April 1999 (1999-04-27)

## Description

### Technical Field

This invention relates to an anti-fouling coating solution capable of forming a hydrophilic coating having an excellent anti-fouling function by applying it onto the surfaces of the bodies and wheels of automobiles, trains, airplanes etc., dentures, tombstones, the interior and exterior of a house, products used with water in toilets, kitchens, washrooms, bathtubs etc., signboards, signs, plastic products, glass products, etc.

### Background Art

Conventionally, various measures are taken to prevent pollution of the surfaces of articles. For example, automobile bodies are easily fouled with dust, combustion products such as exhaust gas, or the like. Therefore the bodies are coated with wax to form a wax coating thus preventing pollution of the bodies. By rendering the surface of the body water-repellent, water upon contacting with the surface of the body forms drops of water to roll down the surface of the body, whereby fouling components in the water can be prevented from adhering and remaining on the surface of the body, while the wax coating makes adhesion of fouling components to the surface of the body difficult, and even if fouling components adhere to the surface, they can be easily washed away with water.

Further, products used with water, such as bathtubs, kitchen sinks, washstands etc. are contacted during use with various materials such as soap liquid containing oils and oily components, facial cleansing cream, hair shampoos etc. in addition to water, among which oily substances and calcium salts of soap (i.e. soap dregs) are considered to adhere to the surfaces of the products with dust etc. to form fouling. To prevent fouling on the product, a glazed surface constituting a glassy surface formed on the product is subjected sometimes to water repellency treatment with wax, a fluorine-containing material, etc. to prevent fouling from remaining on the glazed surface. By this water repellency treatment, it is also attempted to prevent adhesion of fouling to the interior and exterior of a house, toilet stools, products used with water, signboards, signs, tombstones etc.

On the other hand, the modification of the surface of a base material by coating the surface with a surfactant to render it hydrophilic has been known for a long time, and a further improvement in durability of this hydrophilicity by adding and incorporating a water-soluble organic polymer such as polyacrylic acid or polyvinyl alcohol into the surfactant is described in JP-A 52-101680 etc. Further, a method of applying and fixing a hydrophilic material such as cellulose, glycols and glycerine via a coating of a polyvinyl alcohol-vinyl acetate copolymer to the surface and inside of a porous film made of a hydrophobic polymer is known as described in JP-B 5-67330 etc.

However, the water-repellent effect of water-repellency treatment with conventional water-repellant wax cannot be said to be satisfactory, or even if sufficient water-repellency treatment is initially conducted, the effect cannot be said to be long-lasting, thus failing to exhibit a long and sufficient anti-fouling effect. Further, the conventional hydrophilic coating confers hydrophilicity merely temporarily or in a short time, and therefore the sufficient durability of the hydrophilic effect can hardly be expected, and the water film on the hydrophilic coating is hardly rendered uniform, thus causing a transmission image or reflected image to be warped and making practical application thereof to the products problematic.

Furthermore with respect to prevention of dentures from fouling and generating smell, fluorine treatment and the like have been examined, but cannot be said to achieve a sufficient effect for a long time by treating the dentures once.

This invention is made to solve the problems described above, and an object of the invention is to provide an anti-fouling coating solution which is excellent in adhesion to a base material, is able to form a rigid and dense coating after application, and confers a long-durable hydrophilic effect and anti-fouling effect on the surface of an article. By use of the coating solution it is intended that a hydrophilic anti-fouling coating is formed on each of automobile bodies, automobile wheels, dentures, tombstones, the interior and exterior of a house, products used with water in toilets, kitchens, washrooms, bathtubs etc., toilet stools, signboards, signs, plastic products, glass products etc., to achieve an excellent anti-fouling effect on the surfaces of the articles.

Further, another object of this invention is to provide a suitable anti-fouling coating solution adapted to various uses and applications because required characteristics such as outward appearance (e.g. uniform transparency) after coating, drying characteristics, smell, safety and less damage to a base material are varied depending on the article coated with the coating solution.

### Disclosure of Invention

This invention relates to an anti-fouling coating solution having the following characteristics:
(1) An anti-fouling coating solution comprising an inorganic polysilazane, a diluting solvent and a catalyst.
(2) The anti-fouling coating solution according to the above-mentioned item 1, wherein mineral sprit is used as the diluting solvent.
(3) The anti-fouling coating solution according to the above-mentioned item 1, wherein a paraffin type solvent is used as the diluting solvent.
(4) The anti-fouling coating solution according to the above-mentioned item 2 or 3, wherein the diluting solvent further comprises one or more of solvents selected from xylene, methylcyclohexane and ethylcyclohexane.
(5) The anti-fouling coating solution according to any one of the above-mentioned items 1 to 4, wherein the concentration of the inorganic polysilazane is 0.5 to 10% by weight.
(6) The anti-fouling coating solution according to any one of the above-mentioned items 1 to 5, wherein the catalyst is contained in an amount of 0.5 to 10% by weight based on a pure inorganic polysilazane.
(7) The anti-fouling coating solution according to any one of the above-mentioned items 1 to 6, wherein 4,4'-trimethylenebis(1-methylpiperidine) is used as the catalyst.

### Preferred Mode of the Invention

Hereinafter, this invention is described in more detail.

The anti-fouling coating solution of the invention comprises an inorganic polysilazane, a diluting solvent and a catalyst as essential components, and the inorganic polysilazane used in the anti-fouling coating solution of the invention includes the one soluble in a solvent and having repeating units represented by the general formula:

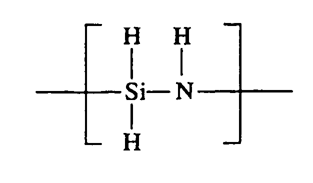

The inorganic polysilazane having repeating units represented by the above general formula and soluble in a solvent, used in this invention, may be any polysilazanes produced by a method known in the art.

As the method of producing the inorganic polysilazane having repeating units represented by the above general formula and soluble in a solvent, any one of arbitrary methods including methods known in the art may be used. One of the methods is, for example, a method of synthesizing an inorganic polysilazane by reacting a dihalosilane represented by the general formula SiH₂X₂ (X is a halogen atom) with a base to form a dihalosilane adduct and then reacting the dihalosilane adduct with ammonia. The halosilane is generally acidic and can react with a base to form an adduct. Because the rate of formation of this adduct and the stability of the adduct depend on the acidity of the halosilane and the basicity of the basic substance or on steric factor etc., the type of halosilane and the type of base may be selected suitably to form a stable adduct capable of reacting with ammonia to produce an inorganic polysilazane easily. The stability of adduct in this case does not necessarily mean such stability as to be able to be isolated in the form of adduct, but means all possible cases where, for example, the adduct occurs stably in a solvent but also functions substantially as a reaction intermediate.

As the halosilane, a dihalosilane represented by the general formula SiH₂X₂ (X = F, Cl, Br, or I) is preferably selected from the viewpoint of the handling and reactivity thereof, and particularly dichlorosilane is preferably selected from the viewpoint of the reactivity, the price of its starting material, etc.

The base used for forming the adduct may be a base not causing other reactions than the reaction of forming an adduct with a halosilane, and preferable examples thereof include Lewis bases, tertiary amines (trialkylamines), pyridine, picoline and derivatives thereof, secondary amines having a sterically hindered group, phosphine, arsine and derivatives thereof (for example, trimethyl phosphine, dimethylethyl phosphine, methyldiethyl phosphine, trimethyl arsine, trimethyl stilbene, trimethylamine, triethylamine, thiophene, furan, dioxane, selenophene etc.), among which pyridine and picoline are particularly preferable for handling and from an economical viewpoint. The amount of the base used is not particularly required to be strict, and the base may be present in excess over the stoichiometric ratio of the base (including an amine in an adduct) to the silane, that is, in excess over the ratio of amine : silane = 2 : 1. The reaction of forming an adduct is carried out in a solvent.

In synthesis of the inorganic polysilazane via an adduct, the adduct is reacted with ammonia in an inert solution to form the inorganic polysilazane, wherein the amount of ammonia may be in excess over silane, and the reaction conditions are that the reaction temperature is usually -78°C to 100°C, preferably -40°C to 80°C, and the reaction time and reaction pressure are not particularly limited. The polymerization reaction of the inorganic polysilazane is carried out preferably in an inert gas atmosphere, and the inert gas is preferably nitrogen or argon.

In the present invention, the inorganic polysilazane may be the one soluble in a solvent and having repeating units represented by the general formula above, but usually the one having a number-average molecular weight in the range of 600 to 3000 is preferably used. Further, the inorganic polysilazane is used preferably in an amount of 0.5 to 10% by weight based on the total weight of the coating solution.

On the other hand, the catalyst used in this invention has a function of converting the inorganic polysilazane into silica at ordinary temperatures. The catalyst is compounded preferably in an amount of 0.5 to 10 % by weight based on a pure inorganic polysilazane.

The diluting solvent used in the anti-fouling coating solution of the invention may be any of diluting solvents capable of dissolving the inorganic polysilazane and the catalyst. In consideration of storage stability, the diluting solvent is preferably a solvent having a sustained ability to dissolve the inorganic polysilazane and the catalyst, and the solvent even used for a long time is preferably stable without evolution of gases such as silane, hydrogen, ammonia, etc. The diluting solvent used in the anti-fouling coating solution of the invention includes petroleum solvents such as mineral spirit, paraffin type solvents, aromatic solvents and alicyclic solvents. Examples of these solvents or solvent components include paraffin type solvents or solvent components such as octane and 2,2,3-trimethylpentane with 8 carbons, nonane and 2,2,5-trimethylhexane with 9 carbons, decane with 10 carbons, n-undecane with 11 carbons, etc., aromatic solvents or solvent components such as xylene with 8 carbons, cumene and mesitylene with 9 carbons, naphthalene, tetrahydronaphthalene, butylbenzene, p-cymene, diethylbenzene and tetramethylbenzene with 10 carbons, pentylbenzene with 11 carbons, etc., and alicyclic solvents or solvent components such as methylcyclohexane with 7 carbons, ethylcyclohexane with 8 carbons, p-menthane, α-pinene, dipentene and decalin with 10 carbons, etc. These solvents are exemplified merely for illustrative purposes, and the solvents or solvent components are not limited to those exemplified specifically. Further, these solvents or solvent components are used alone or as a mixture thereof.

The anti-fouling coating solution of the invention can be applied onto the surfaces of automobile bodies, automobile wheels, dentures, tombstones, the interior and exterior of a house, products used with water in toilets, kitchens, washrooms, bathtubs etc., toilet stools, signboards, signs, plastic products, glass products etc., to form dense and hydrophilic coatings on the surfaces of these articles. The method of applying the anti-fouling coating solution of the invention may be any of known methods of applying liquids. Specifically, the method of applying the anti-fouling coating solution of the invention includes, for example, a method of wiping with a cloth, a method of wiping with a sponge, spray coating, flow coating, roller coating, dip coating, etc., but the coating method is not limited to these exemplified methods. The preferable method of applying the anti-fouling coating solution of the invention is varied depending on various conditions such as the shape, size and quantity of a product to which the coating solution is applied; for example, in the case of automobile bodies and tombstones, a method of wiping with a cloth, a method of wiping with a sponge and spraying are preferable in operation, and in the case of the interior and exterior of a house, roller coating and spray coating are preferable. In the case of dentures, spray coating and dip coating are preferable. Preferably, the coating solution is applied in such an amount as to form a coating of about 0. 1 to 2 microns in thickness after drying.

By applying the anti-fouling coating solution of the invention, a hydrophilic and dense coating can be formed on the surface of a product because the inorganic polysilazane contained in the coating solution is converted into a dense silica coating by the action of the catalyst, thus attaining the strong hydrophilicity of the silica coating. When dried at ordinary temperatures, the anti-fouling coating solution of the invention easily forms a rigid and dense coating made of silica. Formation of this silica coating is varied depending on the type of inorganic polysilazane, the type of catalyst, etc., but the coating will be formed in a period of about 1 to 2 weeks. At the time of application, the coating solution of the invention is in a solution form and can thus be applied very easily to form a coating which after application, can be converted into a dense and rigid hydrophilic coating thereby forming a hydrophilic anti-fouling coating easily on the surfaces of various products. As the coating surface thus formed is more rigid and denser, the coating brings about a higher anti-fouling effect.

When the anti-fouling coating solution of the invention is used to form a hydrophilic and dense silica coating on the surface of e.g. an automobile, a tombstone, the outer wall of a house, or the like, the resultant hydrophilic surface, upon contacting with rainwater, comes to be in the state of a watery coating without forming water drops thereon. In addition, the hydrophilic surface has higher affinity for water than for hydrophobic substances such as combustion products including dust etc., thus permitting these foul substances to be easily washed away with rain water. Further, the amount of smoke and dust adhering thereto can be reduced because of formation of the dense surface. Accordingly, visually noticeable fouling hardly occurs, and the amount of adhering fouling is reduced.

In the case of dentures, acrylic resin as the material of dentures absorbs water with which foul substances enter the resin or are adsorbed or adhered onto the resin, to become a source of the smell of dentures, but the anti-fouling coating solution of the invention forms a hydrophilic and dense silica coating adhering well to dentures at a temperature at which acrylic resin as the denature material is not deformed or deteriorated. Accordingly, the absorption of water into the resin can be prevented, thus preventing the invasion of foul substances into the denture material, and even if foul substances adhere to the silica coating, they can be easily washed away with water, and thus evolution of smell can be prevented. Further, dentures are coated with the anti-fouling coating solution of the invention, so that even if unevenness occurs on denatures in finish polishing, the silica coating makes this unevenness smooth to make adhesion of foul substances more difficult. Further, the formed silica coating has high surface hardness and high durability, and is thus not abraded with foods or upon biting, is stable in the living body, and is not eluted. Even if the silica is released, it is nontoxic.

The required properties of the anti-fouling coating solution of the invention, for example, outward appearance, drying characteristics, smell, safety, damage to a base material, and storage stability of the coating solution, are varied a little bit depending on the use of a product to which the coating solution is applied. To cope therewith, the most suitable coating solution for intended use can be easily provided by changing not only the type and amount of the inorganic polysilazane and catalyst used but also the type of the solvent and the compounding ratio.

For example, a heavy solvent such as mineral spirit is suitable as the solvent for readily noticeably fouled base materials whose outward appearance is regarded as important, such as an automobile coated in dark color, dentures, polished granite, a mirror-finish metal or a plated substrate, transparent resin and glass. Mineral terpenes Pegasol AN45 and Pegasol 3040 from Mobil Sekiyu Corp. are also preferably usable solvents. By using mineral sprit as the solvent, base materials whose spots, interference colors, whiteness and grittiness are readily noticeable can be beautifully coated with the anti-fouling coating solution. Mineral spirit has the above-described advantage, but is relatively poor in the solubilizing power so that for compensating for the solubilizing power, mixed aromatic solvents such as Solvesso 100 and Solvesso 150 from Esso Oil Co. and Pegasol R-100 and Pegasol R-150 from Mobil Sekiyu Corp. may be compounded in addition to mineral sprit. Further, paraffin type solvents free of aromatic components can also be used as the solvent. Specifically, low-odor solvents Exsole DSP100/140, Exsole D30, Exsole D40 etc. from Tonen Chemical Co. can be mentioned.

Further, it is also important that products used with water, such as those in toilets, kitchens, washrooms, bathrooms, etc. and dentures are odorless. By adding a low-odor solvent such as methylcyclohexane or ethylcyclohexane if necessary as a part of the solvent, a coating solution with less smell can be provided for such products required to be odorless.

The anti-fouling coating solution of the invention may be applied to a product newly produced or to a product during use.

Then, examples of compositions of the inorganic polysilazane, the catalyst and the diluting solvent in the coating solution intended for the respective uses are shown below. These are shown merely for illustrative purposes, and the composition and compounding ratio of the coating solution may be adapted to the use of a product coated therewith, and the composition and compounding ratio of the coating solution of the invention are not limited to those shown below.

### A. Automobile bodies, wheels

The solution should not damage a coating sublayer and be stable such that particularly when the solution is applied by a cup gun, it is not whitened in the cup gun.

### (Example of Compounding Ratio)

| | |
|---|---|
| Inorganic polysilazane: | 0.3 to 2% by weight |
| DMPP: | 0.01 to 0.1% by weight |
| Xylene: | 0.5 to 10% by weight |
| Pegasol AN45: | balance |

DMPP is 4,4'-trimethylenebis(1-methylpiperidine) (hereinafter this abbreviation is used).

### (Preferable Example of Compounding Ratio)

| | |
|---|---|
| Inorganic polysilazane: | 0.4 to 1% by weight |
| DMPP: | 0.01 to 0.05% by weight |
| Xylene: | 1 to 4% by weight |
| Pegasol AN45: | balance |

### B. Dentures

The solution should be stable without whitening for a long time and safe to the human body with less smell without deforming or deteriorating acrylic resin as the denture material.

### (Example of Compounding Ratio)

| | |
|---|---|
| Inorganic polysilazane: | 0.5 to 5% by weight |
| DMPP: | 0.02 to 0.2% by weight |
| Pegasol AN45: | balance |

### (Preferable Example of Compounding Ratio)

| | |
|---|---|
| Inorganic polysilazane: | 1 to 2% by weight |
| DMPP: | 0.04 to 0.08% by weight |
| Pegasol AN45: | balance |

### C. Tombstones

The solution should show less interference color when applied on granite or the like and be stable for a long time so as not to be whitened.

### (Example of Compounding Ratio)

| | |
|---|---|
| Inorganic polysilazane: | 0.5 to 4% by weight |
| DMPP: | 0.01 to 0.2% by weight |
| Xylene: | 5 to 50% by weight |
| Pegasol 3040: | balance |
| (Preferable Example of Compounding Ratio) | |
| Inorganic polysilazane: | 1 to 3% by weight |
| DMPP: | 0.01 to 0.1% by weight |
| Xylene: | 5 to 15% by weight |
| Pegasol 3040: | balance |

### D. The interior and exterior of a house, bathtubs, kitchens, etc.

The solution should scarcely smell, be stable to the human body, and have a high drying characteristic.

### (Example of Compounding Ratio)

| | |
|---|---|
| Inorganic polysilazane: | 0.3 to 2% by weight |
| DMPP: | 0.01 to 0.2% by weight |
| Xylene: | 1 to 10% by weight |
| Pegasol AN45: | 5 to 88% by weight |
| Ethylcyclohexane: | 5 to 88% by weight |
| Methylcyclohexane: | 5 to 88% by weight |
| (Preferable Example of Compounding Ratio) | |
| Inorganic polysilazane: | 0.5 to 2% by weight |
| DMPP: | 0.01 to 0.1% by weight |
| Xylene: | 1 to 5% by weight |
| Pegasol AN45: | 20 to 50% by weight |
| Ethylcyclohexane: | 20 to 50% by weight |
| Methylcyclohexane: | 20 to 50% by weight |

### E. Polycarbonate plate

The solution should not erode a polycarbonate plate as a substrate.

### (Example of Compounding Ratio)

| | |
|---|---|
| Inorganic polysilazane: | 0.5 to 5% by weight |
| DMPP: | 0.01 to 0.4% by weight |
| Xylene: | 1 to 10% by weight |
| Pegasol 3040: | balance |
| (Preferable Example of Compounding Ratio) | |
| Inorganic polysilazane: | 0.5 to 4% by weight |
| DMPP: | 0.03 to 0.2% by weight |
| Xylene: | 3 to 10% by weight |
| Pegasol 3040: | balance |

The solvents Pegasol AN45 and Pegasol 3040 (Mobil Sekiyu Corp.), which are fractions produced by hydrogenation and refining of distillated oil obtained by distillation of crude oil at normal pressures, are mainly C₈ to C₁₁ petroleum type hydrocarbons, and their aniline points are 43°C and 54°C respectively, and Pegasol AN45 contains aromatic components in a higher amount than in Pegasol 3040.

### Best Mode for Carrying Out the Invention

Hereinafter, the present invention is described in more detail by reference to the Production Example and the Examples, but the present invention is not limited to the Production Example and the Examples described below.

### Production Example 1 (Production of the inorganic polysilazane)

A gas inlet tube, a mechanical stirrer and a Dewar condenser were fit into a four-necked flask with an internal volume of 300 ml. The inside of the reactor was replaced by dry deoxygenated nitrogen, and then 150 ml of dry degassed pyridine was introduced into the four-necked flask and cooled on ice. Then, 16.1 g dichlorosilane was added thereto over 50 minutes, to form a white solid adduct (SiH₂Cl₂·2Py). The reaction mixture was cooled on ice under vigorous stirring and bubbled over 1 hour with a mixture of a nitrogen gas and 10.9 g ammonia previously purified by passage through a soda lime tube and an active carbon tube. After the reaction was finished, the solid product was removed by centrifugation and subsequent filtration. By removing the solvent from the filtrate under reduced pressure (50°C, 5 mmHg, 2 hours), 5.52 g glassy solid polysilazane was obtained. The molecular weight of the polysilazane determined by a vapor pressure depression method was 2000. The yield was 77%.

### Example 1

0. 5 part by weight of the inorganic polysilazane obtained in Production Example 1 and 0.02 part by weight of DMPP (catalyst) were dissolved in a solvent consisting of 1. 98 parts by weight of xylene and 97.5 parts by weight of Pegasol AN45 (Mobil Sekiyu Corp.), to give an anti-fouling coating solution for automobile bodies and wheels.

The coating solution was coated by spraying with a spray gun onto a coated steel plate in such an amount as to give a coating of 0.2 µm in thickness after conversion into silica. After drying, the coating was examined in an outdoor exposure test, and the change in contact angle was observed, to give the results in Table 1.

**Table 1**

| | | | | | | | | |
|---|---|---|---|---|---|---|---|---|
| Number of outdoor exposure days (days) | 0 | 7 | 14 | 21 | 28 | 3 months | 6 months | 1 year |
| Contact angle (degrees) | 65 | 41 | 23 | 16 | 11 | 10 | 9 | 10 |

As can be seen from Table 1, formation of a silica coating gradually proceeded, and 2 weeks later, a hydrophilic coating had been almost formed, and by this hydrophilic silica coating, the coated steel plate remained in a stably coated state for a long time. The coated steel plate, observed after 6 months and 1 year respectively, was not recognized to be fouled.

This coating solution was sealed in a nitrogen atmosphere, stored at ordinary temperatures, and examined for generation of monosilane after 1 month, 3 months and 6 months respectively, and as a result, the amount of monosilane generated was 43 ppm after 1 month, 61 ppm after 3 months and 75 ppm after 6 months, indicating good storage stability.

When the coating solution in Example 1 was placed in the cup of a spray gun and left for 30 minutes at ordinary temperatures in the air, the solution maintained its transparent state. Separately, a coating solution was prepared from the same composition described above except that Pegasol AN45 was replaced by Pegasol 3040 (Mobil Sekiyu Corp.) having a lower aromatic content than in Pegasol AN45, and this coating solution turned turbid after 20 minutes. From this result, it was found that when an automobile anti-fouling coating solution having the composition described above is applied by a spray gun, a solvent containing aromatic components in a higher amount within a range not influencing a coating sublayer is preferably used in the coating solution from the viewpoint of stability of the coating solution.

### Example 2

One part by weight of the inorganic polysilazane obtained in Production Example 1 and 0.04 part by weight of DMPP (catalyst) were dissolved in a solvent consisting of 98.96 parts by weight of Pegasol AN45 (Mobil Sekiyu Corp.), to give an anti-fouling coating solution for dentures.

This coating solution was applied by a spray gun onto the whole of dentures to form a silica coating of 0.3 µm in thickness thereon. The coating was converted completely into silica by drying it at 45°C for 60 minutes in an oven and subsequent treatment for 12 hours under the conditions of 40°C and 90% relative humidity in a high-temperature high-humidity apparatus. A hydrophilic and dense silica coating was formed on the surface of the dentures, and when the dentures were used, the coating was not deteriorated, and fouling could be easily washed away with water, and no smell was generated.

### Example 3

One part by weight of the inorganic polysilazane obtained in Production Example 1 and 0.04 part by weight of DMPP (catalyst) were dissolved in a solvent consisting of 11.46 parts by weight of xylene and 87.5 parts by weight of Pegasol 3040 (Mobil Sekiyu Corp.), to give an anti-fouling coating solution for tombstones.

This coating solution was applied by aerosol spraying onto polished granite. A uniform coating of 0.4 µm in thickness was thereby formed. After 2 weeks, a hydrophilic and dense silica coating was formed on the surface, and when left outdoors for 1 year, the coating was not deteriorated, and no fouling was observed.

### Example 4

0.5 part by weight of the inorganic polysilazane obtained in Production Example 1 and 0.02 part by weight of DMPP (catalyst) were dissolved in a solvent consisting of 1.98 parts by weight of xylene, 32.5 parts by weight of Pegasol AN45 (Mobil Sekiyu Corp.), 32.5 parts by weight of ethylcyclohexane and 32.5 parts by weight of methylcyclohexane, to give an anti-fouling coating solution for coating of products used with water, such as bathtubs, washstands etc. This coating solution was applied onto the surfaces of a washstand made of ceramic ware and an enameled bathtub. A 0.2 µm uniform coating was formed respectively. Fouling hardly adhered, and if adhered, the fouling could be easily removed.

### Example 5

One part by weight of the inorganic polysilazane obtained in Production Example 1 and 0.04 part by weight of DMPP (catalyst) were dissolved in a solvent consisting of 3.96 parts by weight of xylene, 31.7 parts by weight of Pegasol AN45 (Mobil Sekiyu Corp.), 31.7 parts by weight of ethylcyclohexane and 31.7 parts by weight of methylcyclohexane, to give an anti-fouling coating solution for the interior and exterior of a house. This coating solution was applied by rolling onto the surface of the outer wall of a house. The outer wall was not fouled for a long time. Fouling such as dust could be easily removed by spraying with water.

### Example 6

Two parts by weight of the inorganic polysilazane obtained in Production Example 1 and 0.08 part by weight of DMPP (catalyst) were dissolved in a solvent consisting of 7.92 parts by weight of xylene and 90 parts by weight of Pegasol 3040 (Mobil Sekiyu Corp.), to give an anti-fouling coating solution for polycarbonate plates. Using a cloth impregnated with this coating solution, the coating solution was applied by hand onto a polycarbonate plate. A hydrophilic and dense silica coating could be formed on the surface without erosion of the substrate by the coating solution.

### Effect of the Invention

As described above, the hydrophilic coating-forming anti-fouling coating solution of the invention is in a liquid form at the time of application, and thus the coating solution can be easily applied by spray coating or a method of wiping with a cloth or sponge, and after application, the polysilazane in a liquid form can be converted into a rigid and dense coating, thus easily forming a hydrophilic coating film very excellent in anti-fouling effect. In addition, the hydrophilicity of the coating film thus formed is durable and its effective hydrophilicity can be maintained usually for 1 to 2 years. Further, the anti-fouling coating solution can be applied in very wide uses by merely regulating the type of solvent, the amounts of compounding materials, etc.

### Industrial Applicability

As described above, the hydrophilic coating-forming anti-fouling coating solution of the invention is very useful as an hydrophilic anti-fouling coating material for the surfaces of the bodies and wheels of automobiles, trains, airplanes etc., dentures, tombstones, the interior and exterior of a house, products used with water in toilets, kitchens, washrooms, bathtubs etc., signboards, signs, plastic products, glass products, etc.

## Claims

1. The use of a solution comprising an inorganic polysilazane, a diluting solvent and a catalyst, wherein mineral spirit or a paraffin type solvent is used as the diluting solvent, or wherein the diluting solvent comprises one or more of solvents selected from xylene, methylcyclohexane and ethylcyclohexane and 4,4'-trimethylenebis(1-methylpiperidine) is used as the catalyst to form a dense and rigid coating on the surface of articles that has a hydrophilic and anti-fouling effect.

2. The use according to Claim 1, wherein the diluting solvent further comprises one or more of solvents selected from xylene, methylcyclohexane and ethylcyclohexane.

3. The use according to Claim 1, wherein the concentration of the inorganic polysilazane is 0.5 to 10% by weight.

4. The use according Claim 1, wherein the catalyst is contained in an amount of 0.5 to 10% by weight based on a pure inorganic polysilazane.

## Patentansprüche

1. Verwendung einer Lösung, die ein anorganisches Polysilazan, ein Verdünnungslösungsmittel und einen Katalysator enthält,
wobei als Verdünnungslösungsmittel Testbenzin oder ein Lösungsmittel vom Paraffin-Typ verwendet wird oder
wobei das Verdünnungslösungsmittel ein oder mehrere unter Xylol, Methylcyclohexan und Ethylcyclohexan ausgewählte Lösungsmittel umfaßt und 4,4'-Trimethylenbis(1-methylpiperidin) als Katalysator verwendet wird,
zur Bildung einer dichten und steifen Beschichtung auf der Oberfläche von Gegenständen, die einen hydrophilen Effekt und Antifouling-Effekt aufweist.

2. Verwendung nach Anspruch 1, wobei das Verdünnungslösungsmittel ferner ein oder mehrere unter Xylol, Methylcyclohexan und Ethylcyclohexan ausgewählte Lösungsmittel umfaßt.

3. Verwendung nach Anspruch 1, wobei die Konzentration des anorganischen Polysilazans 0,5 bis 10 Gew.-% beträgt.

4. Verwendung nach Anspruch 1, wobei der Katalysator in einer Menge von 0,5 bis 10 Gew.-%, bezogen auf ein reines anorganisches Polysilazan, enthalten ist.

## Revendications

1. Utilisation d'une solution comprenant un polysilazane inorganique, un solvant de dilution et un catalyseur, dans laquelle une essence minérale ou un solvant de type paraffine est utilisé comme solvant de dilution, ou dans laquelle le solvant de dilution comprend un ou plusieurs solvants choisis parmi le xylène, le méthylcyclohexane ou l'éthylcyclohexane, et le 4,4'-triméthylènebis(1-méthylpipéridine) est utilisé comme catalyseur pour former un revêtement dense et rigide sur la surface d'articles avec un effet hydrophile ou antisalissures.

2. Utilisation selon la revendication 1, dans laquelle le solvant de dilution comprend en outre un ou plusieurs solvants choisis parmi le xylène, le méthylcyclohexane et l'éthylcyclohexane.

3. Utilisation selon la revendication 1, dans laquelle la concentration du polysilazane inorganique varie de 0,5 à 10 % en poids.

4. Utilisation selon la revendication 1, dans laquelle le catalyseur est présent en une quantité de 0,5 à 10 % en poids basée sur le polysilazane inorganique pur.
